# EUROPEAN PATENT APPLICATION

(11) **EP 4 086 795 A1**
(43) Date of publication of application: **09.11.2022**
(21) Application number: 20911195.4
(22) Date of filing: 16.12.2020
(51) Int. Cl.: G06F 21/56

(54) **MALICIOUS FILE REPAIRING METHOD AND APPARATUS, ELECTRONIC DEVICE, AND STORAGE MEDIUM**

(30) Priority: 31.12.2019 CN 201911422504
(71) Applicant: Sangfor Technologies Inc., Shenzhen, Guangdong 518055 (CN)
(72) Inventor: WEI, Kaizhi, Shenzhen, Guangdong 518055 (CN); GUAN, Enyang, Shenzhen, Guangdong 518055 (CN)
(74) Representative: Müller Schupfner & Partner Patent- und Rechtsanwaltspartnerschaft mbB
(86) International application number: PCT/CN2020/136703
(87) International publication number: WO 2021/135940

(57) **Abstract**

A malicious file repairing method and apparatus, an electronic device, and a storage medium. The repairing method comprises: extracting file features of a malicious file, the file feature comprising a file attribute and a family common feature string, the file attribute comprising any one or a combination of file size, node quantity, and node permission, and the family common feature string comprising any one or a combination of a file offset address, an entry point offset address, and a node offset address; determining a target infection type virus family corresponding to the malicious file according to the file features; and performing a file repair operation corresponding to the target infection type virus family on the malicious file. The virus family corresponding to the malicious file can be accurately identified, and the malicious file repair efficiency is improved.

## Description

This application claims the priority to Chinese Patent Application No. 201911422504.1, titled "MALICIOUS FILE REPAIRING METHOD AND APPARATUS, ELECTRONIC DEVICE, AND STORAGE MEDIUM", filed on December 31, 2019 with the China National Intellectual Property Administration (CNIPA), which is incorporated herein by reference in its entirety.

### FIELD

The present disclosure relates to the technical field of information security, and in particular to a method and an apparatus for repairing a malicious file, an electronic device and a storage medium.

### BACKGROUND

With the development of artificial intelligence technology, it is a common way to detect a malicious file by identifying the malicious file based on the generalization of an artificial intelligence (AI) algorithm. According to the conventional technology, the malicious file detected by an AI engine is directly sent to an infection-type repair module. The infection-type repair module traverses an identification code of each family, and performs a repair process for a virus family after identifying the specific family. According to the above conventional technology, identification codes of all virus families are traversed for file parsing and determining through hard coding, to determine a virus family to which the malicious file belongs. Such identification process in traversing all families is quite time-consuming, resulting in a low efficiency of repairing the malicious file.

Therefore, how to accurately identify a virus family corresponding to a malicious file and improve the efficiency of repairing the malicious file is a technical problem to be solved by those skilled in the art.

### SUMMARY

A method and an apparatus for repairing a malicious file, an electronic device and a storage medium are provided according to the present disclosure, so as to accurately identify a virus family corresponding to a malicious file and improve the efficiency of repairing the malicious file.

To solve the above technical problems, a method for repairing a malicious file is provided according to the present disclosure. The method for repairing a malicious file includes:
extracting a file feature of a malicious file, where the file feature includes a file attribute and a family common feature string, the file attribute includes at least one of a file size, a quantity of sections and a section authority, and the family common feature string includes at least one of a file offset address, an entry point offset address and a section offset address;
determining a target infection-type virus family corresponding to the malicious file according to the file feature; and
performing a file repair operation corresponding to the target infection-type virus family on the malicious file.

In an embodiment, the determining a target infection-type virus family corresponding to the malicious file according to the file feature includes:
matching the file feature with a target feature library based on a multi-pattern string matching algorithm, where the target feature library includes a preset file attribute and a preset family common feature string corresponding to the infection-type virus family; and
determining the target infection-type virus family corresponding to the malicious file according to a matching result.

In an embodiment, the determining the target infection-type virus family corresponding to the malicious file according to a matching result includes:
setting, according to the matching result, an infection-type virus family with a same file attribute and a same family common feature string as the malicious file as the target infection-type virus family.

In an embodiment, the determining the target infection-type virus family corresponding to the malicious file according to a matching result includes:
determining, according to the matching result, whether the file feature conforms to a standard feature rule corresponding to a first infection-type virus family or a generalized feature rule corresponding to a second infection-type virus family, where the first infection-type virus family is an infection-type virus family with a static rule, and the second infection-type virus family is an infection-type virus family without a static rule;
setting the first infection-type virus family corresponding to the file feature as the target infection-type virus family, in a case that the file feature conforms to the standard feature rule corresponding to the first infection-type virus family; and
performing file parsing on the malicious file through hard coding, traversing all identification codes of the second infection-type virus family according to a file parsing result, and determining the target infection-type virus family according to a traversal result, in a case that the file feature conforms to the generalized feature rule corresponding to the second infection-type virus family.

In an embodiment, the performing file parsing on the malicious file through hard coding includes:
performing at least one of a decryption operation and a virtual execution operation on the malicious file through hard coding.

In an embodiment, the determining a target infection-type virus family corresponding to the malicious file according to the file feature includes:
inputting the file feature into a classification model to acquire a classification result, and determining the target infection-type virus family corresponding to the malicious file according to the classification result.

In an embodiment, the performing a file repair operation corresponding to the target infection-type virus family on the malicious file includes:
querying a repair solution corresponding to the target infection-type virus family, where the repair solution is acquired by performing reverse analysis on a virus infection way of the target infection-type virus family; and
performing the file repair operation corresponding to the target infection-type virus family on the malicious file according to the repair solution.

An apparatus for repairing a malicious file is further provided according to the present disclosure. The apparatus for repairing a malicious file includes:
a feature extraction module, configured to extract a file feature of a malicious file, where the file feature includes a file attribute and a family common feature string, the file attribute includes at least one of a file size, a quantity of sections and a section authority, and the family common feature string includes at least one of a file offset address, an entry point offset address and a section offset address;
a family determination module, configured to determine a target infection-type virus family corresponding to the malicious file according to the file feature; and
a file repair module, configured to perform a file repair operation corresponding to the target infection-type virus family on the malicious file.

A storage medium is further provided according to the present disclosure. The storage medium stores a computer program. The computer program, when being executed, implements steps of the method for repairing a malicious file described above.

An electronic device is further provided according to the present disclosure. The electronic device includes:
a memory, storing a computer program; and
a processor, configured to, when calling the computer program stored in the memory, implement steps of the method for repairing a malicious file described above.

The method for repairing a malicious file according to the present disclosure includes: extracting a file feature of a malicious file, where the file feature includes a file attribute and a family common feature string, the file attribute includes at least one of a file size, a quantity of sections and a section authority, and the family common feature string includes at least one of a file offset address, an entry point offset address and a section offset address; determining a target infection-type virus family corresponding to the malicious file according to the file feature; and performing a file repair operation corresponding to the target infection-type virus family on the malicious file.

According to the present disclosure, a file feature of a malicious file is first extracted, a target infection-type virus family corresponding to the malicious file is determined according to the file feature of the malicious file, and a file repair operation is performed based on a type of the target infection-type virus family corresponding to the malicious file. In the solution for repairing a malicious file according to the present disclosure, the target infection-type virus family is determined based on a file attribute, instead of comparing identification codes of all virus families. Therefore, according to the present disclosure, the virus family corresponding to the malicious file can be accurately identified and the efficiency of repairing the malicious file can be improved. An apparatus for repairing a malicious file, an electronic device and a storage medium are further provided according to the present disclosure, and have the above beneficial effects which are not repeated herein.

### BRIEF DESCRIPTION OF THE DRAWINGS

In order to clearly describe the technical solutions in the embodiments of the present disclosure or in the conventional technology, drawings to be used in the description of the embodiments of the present disclosure or the conventional technology are briefly described hereinafter. It is apparent that the drawings described below are merely used for describing some embodiments of the present disclosure, and other drawings may be obtained by those skilled in the art without any creative effort according to the provided drawings.
Figure 1 is a flow chart of a method for repairing a malicious file according to an embodiment of the present disclosure;
Figure 2 is a flow chart of a method for detecting a target infection-type virus family according to an embodiment of the present disclosure; and
Figure 3 is a schematic structural diagram of an apparatus for repairing a malicious file according to an embodiment of the present disclosure.

### DETAILED DESCRIPTION

In order to make the objectives, technical solutions and advantages of the embodiments of the present disclosure more clear, hereinafter, technical solutions in the embodiments of the present disclosure will be described clearly and completely in conjunction with the drawings in the embodiments of the present disclosure. It is apparent that the embodiments in the following description are only some embodiments of the present disclosure, rather than all of the embodiments. Based on the embodiments of the present disclosure, all other embodiments obtained by those skilled in the art without any creative work fall within the scope of protection of the present disclosure.

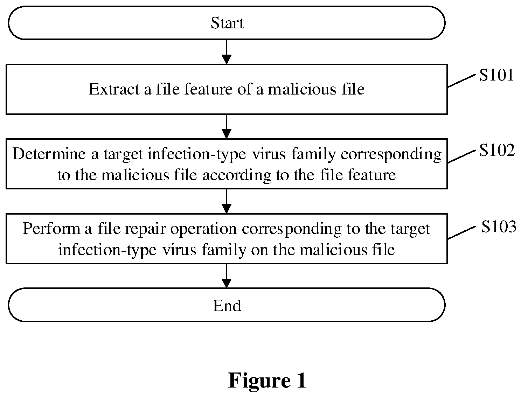

Reference is made to Figure 1, which is a flow chart of a method for repairing a malicious file according to an embodiment of the present disclosure. The method includes steps S101 to S103.

In step S101, a file feature of a malicious file is extracted.

Before step S101, virus detection may be performed on an unknown file to determine whether the unknown file is a malicious file or a white file. The malicious file is a virus file. The file feature may include a file attribute and a family common feature string. The file attribute may include a file size, a quantity of sections, a section authority and other information. The family common feature string may include a file offset address, an entry point offset address, a section offset address and other position information.

In step S102, a target infection-type virus family corresponding to the malicious file is determined according to the file feature.

An infection-type malicious file may be repaired through a file repair operation. Therefore, in step S102, it is determined whether the malicious file is an infection-type malicious file by determining whether the file feature of the malicious file conforms to a feature rule corresponding to an infection-type virus family. The infection-type malicious file is a file infected by an infection-type virus. The infection-type virus adds itself to other program or dynamic library file, and thus can run synchronously with an infected program, resulting in destroying of an infected computer and spreading of the infection-type virus. In an embodiment, the file feature is further inputted into a classification model to acquire a classification result, and the target infection-type virus family corresponding to the malicious file is determined according to the classification result.

In an embodiment, feature rules corresponding to all virus families may be preset, and the file feature of the malicious file is compared with a feature rule corresponding to each of the virus families. Therefore, after determining that the file feature conforms to the feature rule corresponding to the infection-type virus family, the target infection-type virus family corresponding to the malicious file may further be determined according to a correspondence between the file feature and the feature rule.

In step S103, a file repair operation corresponding to the target infection-type virus family is performed on the malicious file.

Since different infection-type virus families have respective file repair operations, it is necessary to determine a file repair solution according to a type of the infection-type virus family corresponding to the malicious file. Specifically, viruses with a same infection way belong to a same virus family, a repair solution may be acquired by performing reverse analysis on the infection way of the virus family, and then the file repair operation corresponding to the target infection-type virus family is performed on the malicious file.

In an embodiment, a file feature of a malicious file is first extracted, a target infection-type virus family corresponding to the malicious file is determined according to the file feature of the malicious file, and a file repair operation is performed based on a type of the target infection-type virus family corresponding to the malicious file. In the solution for repairing a malicious file according to the embodiment, the target infection-type virus family is determined based on a file attribute, instead of comparing identification codes of all virus families. Therefore, according to the embodiment, the virus family corresponding to the malicious file can be accurately identified and the efficiency of repairing the malicious file can be improved.

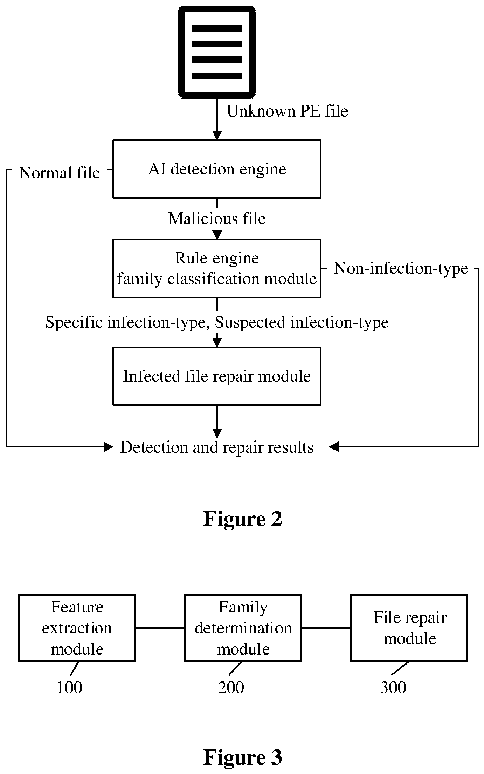

Reference is made to Figure 2, which is a flow chart of a method for detecting a target infection-type virus family according to an embodiment of the present disclosure. Steps S102 and S103 according to the embodiment shown in Figure 1 is further introduced in this embodiment. This embodiment may be combined with the embodiment shown Figure 1 to acquire a preferred embodiment. In this embodiment, the method for detecting a target infection-type virus family may include the following steps S201 to S203.

In step S201, the file feature is matched with a target feature library based on a multi-pattern string matching algorithm.

The target feature library includes a preset file attribute and a preset family common feature string corresponding to the infection-type virus family. In the embodiment, the file attribute of the malicious file may be matched with the preset file attribute based on a keyword to acquire a first matching result, and the family common feature string of the malicious file may be matched with the preset family common feature string based on a keyword to acquire a second matching result.

In step S202, it is determined whether the file feature conforms to the feature rule corresponding to the infection-type virus family according to a matching result. In a case that the file feature conforms to the feature rule corresponding to the infection-type virus family, proceed to step S203. In a case that the file feature does not conform to the feature rule corresponding to the infection-type virus family, the process is ended.

In step S202, it may be determined whether the file feature conforms to the feature rule corresponding to the infection-type virus family according to the first matching result and the second matching result described above. For example, it is determined that the file attribute of the malicious file is completely consistent with preset file attributes of an infection-type virus family A and an infection-type virus family B according to the first matching result, and it is determined that the family common feature string of the malicious file is completely consistent with preset family common feature strings of the infection-type virus family A and an infection-type virus family C according to the second matching result, and thus it is determined that the file feature of the malicious file conforms to the feature rule corresponding to the infection-type virus family A.

In step S203, an infection-type virus family with a same file attribute and a same family common feature string as the malicious file is set as the target infection-type virus family according to the matching result.

According to the above embodiment, the target infection-type virus family corresponding to the malicious file is determined in a keyword-matching manner through the multi-pattern string matching algorithm, which has higher detection efficiency than the manner of comparing identification codes of all virus families. In the embodiment, a file feature of a malicious file is first extracted, and the file feature of the malicious file is compared with feature rules corresponding to all infection-type virus families. In a case that the file feature of the malicious file is the same as a feature rule corresponding to any one of the infection-type virus families, it may be determined that the malicious file is the malicious file corresponding to the infection-type virus, and a file repair operation is performed based on a type of the virus family corresponding to the malicious file. In the solution for repairing a malicious file according to the embodiment, the file attribute and the family common feature string serve as information to be matched with the feature rules of the virus families, without comparing identification codes of all the virus families. Therefore, according to the embodiment, the virus family corresponding to the malicious file can be accurately identified, thereby improving the efficiency of detecting the virus family.

As a further introduction to the embodiment shown in Figure 1, operations in S102 may include the following steps. It is determined whether the file feature conforms to a standard feature rule corresponding to a first infection-type virus family or a generalized feature rule corresponding to a second infection-type virus family. In a case that the file feature conforms to the standard feature rule or the generalized feature rule, it is determined that the file feature conforms to the feature rule corresponding to the infection-type virus family. Specifically, the first infection-type virus family is an infection-type virus family with a static rule, and the second infection-type virus family is an infection-type virus family without a static rule. The static rule is a feature rule capable to directly identify the target infection-type virus family corresponding to the malicious file. Therefore, in a case that the file feature conforms to the standard feature rule, it can be determined the target infection-type virus family corresponding to the malicious file; and in a case that the file feature conforms to the generalized feature rule, it can be determined that the malicious file is a file infected by the infection-type virus, but it cannot be directly determined the target infection-type virus family corresponding to the malicious file.

Further, during a process of determining the file feature of the malicious file based on the standard feature rule and the generalized feature rule, the determining the target infection-type virus family corresponding to the malicious file in step S103 may include the following steps. In a case that the file feature conforms to the standard feature rule corresponding to the first infection-type virus family, the first infection-type virus family corresponding to the file feature is set as the target infection-type virus family. In a case that the file feature conforms to the generalized feature rule corresponding to the second infection-type virus family, file parsing is performed on the malicious file through hard coding, all identification codes of the second infection-type virus family are traversed according to a file parsing result, and the target infection-type virus family is determined according to a traversal result. The process of performing file parsing on the malicious file through hard coding may include: performing at least one of a decryption operation and a virtual execution operation on the malicious file through hard coding.

As a further introduction to the embodiment shown in Figure 1, the process of performing the file repair operation in S103 may include the following steps. A repair solution corresponding to the target infection-type virus family is queried. The repair solution is acquired by performing reverse analysis on a virus infection way of the target infection-type virus family. Then, the file repair operation corresponding to the target infection-type virus family is performed on the malicious file according to the repair solution.

The processes described in the above embodiments will be described through embodiments in practical applications below. Reference is made to Figure 2, which is a schematic diagram showing an operation principle of a system for killing a virus and repairing an infected file based on an AI detection engine according to an embodiment of the present disclosure.

A malicious file artificial intelligence (AI) detection engine may extract multi-dimensional features of known malicious samples. The multi-dimensional features include: a file header field, an import and export table, a string, and entropy of a key structure. The multi-dimensional features are converted into a feature vector, subjected to dimension reduction processing, and then trained into a model through an AI algorithm such as machine learning or deep learning. An inputted unknown file is predicted, to determine whether the unknown file is a malicious file. The AI-based detection engine serves as a primary detection engine for identifying whether an unknown file is a malicious file, due to its strong generalization capability and strong identification capability for the unknown sample.

A rule engine family classification module may receive a malicious file detected by the malicious file AI detection engine, and identify a specific infection-type family, a suspected infection-type family, and a non-infection-type family according to rules.

A rule for effectively identifying the family can be extracted from the specific infection-type virus family, such as Viking, Ramnit and Neshta. The extracted rule mainly includes a file attribute (e.g., a file size, a quantity of sections, and a section authority), and a family common feature string related to a file offset, an entry point offset, a section offset or other position. Then, the virus family is identified by rule matching. In this way, the rule is extracted from the family, so that the specific infection-type family can be clearly identified.

A static rule for effectively representing the family cannot be extracted from the suspected infection-type virus family, such as Sality, Virut and Mabezat. The malicious file may be decrypted to acquire a common feature string that uniquely identifies the family. The decrypted codes may be a common feature string with a shorter length, and it is easily to make an erroneous determination on other family using such feature string. In another case, the decrypted codes may have a common feature string, but a position of the feature string needs to be calculated with some values in content of the file, and it is easy to make an erroneous report by directly matching a whole text of the feature string. Therefore, the rule proposed for the suspected infection-type virus family is defined as a generalized rule, and the priority of the generalized rule is lower than that of the standard rule as described above. The malicious file hitting the generalized rule is determined as a malicious file corresponding to the suspected infection-type virus family.

In a case that the malicious file fails to hit the rule corresponding to the specific infection-type virus family or the rule corresponding to the suspected infection-type virus family, the malicious file is determined as a malicious file corresponding to the non-infection-type virus family.

The above virus family identification rule can distinguish the virus family from other malicious file. For a malicious file that cannot be described by a rule, a generalized rule is applied to reduce the difficulty in extracting a feature. The rule engine family classification module may determine a virus family corresponding to the malicious file based on the multi-pattern string matching algorithm, which has higher identification efficiency than the identification method of traversing identification codes of all families according to the conventional technology.

An infected file repair module may perform reverse analysis on an infection way of the malicious file, to identify the virus family and acquire a repair solution of the virus family. For the infection-type virus family that can be described by a rule, a detection rule of the family may be added to a rule engine of the rule engine family classification module, and the infected file repair module may determine repair codes according to a reverse analysis result of the infection way. For the infection-type virus family that cannot be described by the static rule, detection codes and repair codes of the infection-type virus family may be determined through hard coding. In addition to determining the file attribute and the common feature string like the rule engine, the detection codes sometimes need to read a value of some position, such as a value of a fixed entry point offset position, calculate a decryption key to decrypt, and then find a decrypted common feature string. The detection codes sometimes need to perform virtual execution to find a common feature string in a memory during the operation. The repair codes generally delete an embedded code fragment, decrypt original codes, and modify a size of a portable executable (PE) file header, a quantity of sections, an entry point or the like, so as to restore the original file.

The infected file repair module directly performs a repair process on the specific infection-type virus family. For the suspected infection-type virus family, the infected file repair module identifies the specific infection-type virus family by traversing identification codes of all families, and then executes a specific repair code. For the non-infection-type virus family, the repair module is skipped. This embodiment can improve the efficiency of repairing a file, relative to the solution of sending all abnormal files to detection codes of the repair module to identify and repair the files.

In the embodiment, the malicious file is determined by the AI engine in an abnormal and robust aspect, and an infection-type family is identified by the rule engine. The identification result includes the specific infection-type virus family, the suspected infection-type virus family, and the non-infection-type virus family. Finally, a corresponding repair is performed according to the family identification result. Thus, the problem of repairing the infected file detected by AI engine can be solved, and the infection-type family can be identified by the rule engine, and the repair module has a corresponding processing based on the family identification result, thereby improving the efficiency of repairing the infection-type file.

Reference is made to Figure 3, which is a schematic structural diagram of an apparatus for repairing a malicious file according to an embodiment of the present disclosure. The apparatus may include a feature extraction module 100, a family determination module 200, and a file repair module 300.

The feature extraction module 100 is configured to extract a file feature of a malicious file. The file feature includes a file attribute and a family common feature string. The file attribute includes at least one of a file size, a quantity of sections and a section authority. The family common feature string includes at least one of a file offset address, an entry point offset address and a section offset address.

The family determination module 200 is configured to determine a target infection-type virus family corresponding to the malicious file according to the file feature.

The file repair module 300 is configured to perform a file repair operation corresponding to the target infection-type virus family on the malicious file.

According to the embodiment, a file feature of a malicious file is first extracted, a target infection-type virus family corresponding to the malicious file is determined according to the file feature of the malicious file, and a file repair operation is performed based on a type of the target infection-type virus family corresponding to the malicious file. In the solution for repairing a malicious file according to the embodiment, the target infection-type virus family is determined by using a file attribute, instead of comparing identification codes of all virus families. Therefore, according to the embodiment, the virus family corresponding to the malicious file can be accurately identified and the efficiency of repairing the malicious file can be improved.

Further, the family determination module 200 includes a rule matching unit and a first infection-type virus family determination unit.

The rule matching unit is configured to match the file feature with a target feature library based on a multi-pattern string matching algorithm. The target feature library includes a preset file attribute and a preset family common feature string corresponding to the infection-type virus family.

The first infection-type virus family determination unit is configured to determine the target infection-type virus family corresponding to the malicious file according to a matching result.

Further, the infection-type virus family determination unit is specifically configured to set, according to the matching result, an infection-type virus family with a same file attribute and a same family common feature string as the malicious file as the target infection-type virus family.

Further, the infection-type virus family determination unit is configured to determine, according to the matching result, whether the file feature conforms to a standard feature rule corresponding to a first infection-type virus family or a generalized feature rule corresponding to a second infection-type virus family. The first infection-type virus family is an infection-type virus family with a static rule, and the second infection-type virus family is an infection-type virus family without a static rule. The infection-type virus family determination unit is further configured to: determine, in a case that the file feature conforms to the standard feature rule corresponding to the first infection-type virus family, the first infection-type virus family corresponding to the file feature as the target infection-type virus family; and perform file parsing on the malicious file through hard coding, traverse all identification codes of the second infection-type virus family according to a file parsing result, and determine the target infection-type virus family according to a traversal result, in a case that the file feature conforms to the generalized feature rule corresponding to the second infection-type virus family.

Further, the infection-type virus family determination unit includes a hard coding sub-unit. The hard coding sub-unit is configured to perform at least one of a decryption operation and a virtual execution operation on the malicious file through hard coding.

Further, the family determination module 200 is specifically configured to input the file feature into a classification model to acquire a classification result, and determine the target infection-type virus family corresponding to the malicious file according to the classification result.

Further, the file repair module 300 includes a solution query unit and a repair operation performing unit.

The solution query unit is configured to query a repair solution corresponding to the target infection-type virus family. The repair solution is acquired by performing reverse analysis on a virus infection way of the target infection-type virus family.

The repair operation performing unit is configured to perform the file repair operation corresponding to the target infection-type virus family on the malicious file according to the repair solution.

Since the embodiments of the apparatus correspond to the embodiments of the method, the embodiments of the apparatus may refer to the embodiments of the method, which are not repeated herein.

A storage medium storing a computer program is further provided according to the present disclosure. The computer program may, when being executed, implement steps of the method according to the above embodiments. The storage medium may include various media capable to store a program code, for example, a USB flash disk, a removable hard disk, a read-only memory (ROM), a random access memory (RAM), a disc, or a compact disk.

An electronic device is further provided according to the present disclosure. The electronic device may include a memory and a processor. The memory stores a computer program. The processor may, when calling the computer program stored in the memory, implement steps of the method according to the above embodiments. The electronic device may further include various network interfaces and a power supply.

The embodiments in the specification are described in a progressive way, and each embodiment lays emphasis on differences from other embodiments. For the same or similar parts between various embodiments, reference may be made to each other. Since the apparatus disclosed in the embodiment corresponds to the method disclosed in the embodiment, the description for the apparatus is simple, and reference may be made to the method in the embodiment for the relevant parts. It should be noted that, for those skilled in the art, some modifications and improvements may be made to the present disclosure without departing from the principle of the present disclosure, and these modifications and improvements should fall within the scope of protection of the present disclosure.

It should be further noted that, the relational terms such as "first", "second" and the like are only used herein to distinguish one entity or operation from another entity or operation, rather than to necessitate or imply that an actual relationship or order exists between the entities or operations. Furthermore, terms "include", "comprise" or any other variants thereof are intended to be non-exclusive. Therefore, a process, method, article or device including a series of elements includes not only the elements but also other elements that are not enumerated or other elements inherent to such process, method, article or device. Unless expressively limited otherwise, a statement of "comprising (including) a..." does not exclude a case that other similar element also exists in the process, method, article or device including the element.

## Claims

1. A method for repairing a malicious file, comprising:
extracting a file feature of a malicious file, wherein the file feature comprises a file attribute and a family common feature string, the file attribute comprises at least one of a file size, a quantity of sections and a section authority, and the family common feature string comprises at least one of a file offset address, an entry point offset address and a section offset address;
determining a target infection-type virus family corresponding to the malicious file according to the file feature; and
performing a file repair operation corresponding to the target infection-type virus family on the malicious file.

2. The method for repairing a malicious file according to claim 1, wherein the determining a target infection-type virus family corresponding to the malicious file according to the file feature comprises:
matching the file feature with a target feature library based on a multi-pattern string matching algorithm, wherein the target feature library comprises a preset file attribute and a preset family common feature string corresponding to the infection-type virus family; and
determining the target infection-type virus family corresponding to the malicious file according to a matching result.

3. The method for repairing a malicious file according to claim 2, wherein the determining the target infection-type virus family corresponding to the malicious file according to a matching result comprises:
setting, according to the matching result, an infection-type virus family with a same file attribute and a same family common feature string as the malicious file as the target infection-type virus family.

4. The method for repairing a malicious file according to claim 2, wherein the determining the target infection-type virus family corresponding to the malicious file according to a matching result comprises:
determining, according to the matching result, whether the file feature conforms to a standard feature rule corresponding to a first infection-type virus family or a generalized feature rule corresponding to a second infection-type virus family, wherein the first infection-type virus family is an infection-type virus family with a static rule, and the second infection-type virus family is an infection-type virus family without a static rule;
setting, in a case that the file feature conforms to the standard feature rule corresponding to the first infection-type virus family, the first infection-type virus family corresponding to the file feature as the target infection-type virus family; and
performing file parsing on the malicious file through hard coding, traversing all identification codes of the second infection-type virus family according to a file parsing result, and determining the target infection-type virus family according to a traversal result, in a case that the file feature conforms to the generalized feature rule corresponding to the second infection-type virus family.

5. The method for repairing a malicious file according to claim 4, wherein the performing file parsing on the malicious file through hard coding comprises:
performing at least one of a decryption operation and a virtual execution operation on the malicious file through hard coding.

6. The method for repairing a malicious file according to claim 1, wherein the determining a target infection-type virus family corresponding to the malicious file according to the file feature comprises:
inputting the file feature into a classification model to acquire a classification result, and determining the target infection-type virus family corresponding to the malicious file according to the classification result.

7. The method for repairing a malicious file according to any one of claims 1 to 6, wherein the performing a file repair operation corresponding to the target infection-type virus family on the malicious file comprises:
querying a repair solution corresponding to the target infection-type virus family, wherein the repair solution is acquired by performing reverse analysis on a virus infection way of the target infection-type virus family; and
performing the file repair operation corresponding to the target infection-type virus family on the malicious file according to the repair solution.

8. An apparatus for repairing a malicious file, comprising:
a feature extraction module, configured to extract a file feature of a malicious file, wherein the file feature comprises a file attribute and a family common feature string, the file attribute comprises at least one of a file size, a quantity of sections and a section authority, and the family common feature string comprises at least one of a file offset address, an entry point offset address and a section offset address;
a family determination module, configured to determine a target infection-type virus family corresponding to the malicious file according to the file feature; and
a file repair module, configured to perform a file repair operation corresponding to the target infection-type virus family on the malicious file.

9. An electronic device, comprising:
a memory, storing a computer program; and
a processor, configured to, when calling the computer program stored in the memory, implement steps of the method for repairing a malicious file according to any one of claims 1 to 7.

10. A storage medium storing computer executable instructions, wherein the computer executable instructions, when being loaded and executed by a processor, implement steps of the method for repairing a malicious file according to any one of claims 1 to 7.
